# DEMANDE DE BREVET EUROPEEN

(11) **EP 0 927 514 A1**
(43) Date de publication de la demande: **07.07.1999**
(21) Numéro de dépôt: 98403305.0
(22) Date de dépôt: 28.12.1998
(51) Int. Cl.: A01G 13/10

(54) **Dispositif de protection de plants d'arbres et procédé pour sa mise en place**

(30) Priorité: 30.12.1997 FR 9716689
(71) Demandeur: Nortene Technologies, F-59000 Lille (FR)
(72) Inventeur: Wallee, Jean-Claude, 62238 Billy Berclau (FR)
(74) Mandataire: Leszczynski, André

(57) **Abrégé**

Dispositif de protection de plants d'arbres, comportant un élément tubulaire en matière plastique, lequel comprend un ensemble de brins longitudinaux et un ensemble de brins transversaux réunis en leurs entrecroisements pour former des mailles.

Ledit élément tubulaire comporte au moins en partie inférieure au sein de chaque maille une pluralité de filaments (4) sensiblement parallèles aux brins longitudinaux (2) et s'étendant librement entre les brins transversaux (3), auxquels ils se raccordent à leurs extrémités.

## Description

La présente invention concerne un dispositif de protection de plants d'arbres ainsi qu'un procédé pour sa mise en place.

L'invention concerne plus particulièrement un dispositif de protection du type comportant un élément tubulaire en matière plastique, cet élément comprenant un ensemble de brins longitudinaux et un ensemble de brins transversaux réunis en leurs entrecroisements pour former des mailles.

De tels dispositifs sont couramment utilisés pour protéger les jeunes pousses vis-à-vis des rongeurs, voire d'animaux de plus grande taille tels que des cervidés.

Les dispositifs connus sont mis en place autour de la partie aérienne des plants à protéger et sont maintenus verticaux au moyen d'un ou plusieurs tuteurs.

Ces dispositifs n'offrent pas entière satisfaction et il demeure un besoin pour disposer d'un dispositif de protection amélioré.

L'invention a ainsi pour objet un nouveau dispositif de protection, caractérisé par le fait que l'élément tubulaire comporte au moins en partie inférieure au sein de chaque maille une pluralité de filaments sensiblement parallèles aux brins longitudinaux et s'étendant librement entre les brins transversaux, auxquels ils se raccordent à leurs extrémités.

Dans une réalisation particulière, l'élément tubulaire comporte en partie supérieure des filaments sensiblement parallèles aux brins transversaux, les filaments parallèles aux brins transversaux et les filaments parallèles aux brins longitudinaux étant réunis en leurs entrecroisements pour former un réseau de petites mailles.

L'invention a encore pour objet un procédé pour mettre en place le dispositif de protection tel que défini plus haut, caractérisé par le fait qu'il comporte les étapes consistant à :
- disposer le plant à l'intérieur de l'élément tubulaire,
- déplacer le plant avec sa motte et l'élément tubulaire jusqu'au lieu de plantation et,
- mettre en terre le plant en enterrant partiellement l'élément tubulaire.

Il a été constaté gu'un dispositif de protection de plants d'arbres selon l'invention présente de nombreux avantages, et notamment :
- les brins longitudinaux et les filaments permettent de faciliter le développement des racines en les guidant vers le bas et en les empêchant de s'accumuler sous la forme d'un chignon,
- les filaments permettant également le passage et la croissance des racines et étant suffisamment flexibles pour pouvoir s'écarter,
- les brins longitudinaux peuvent être réalisés avec une section importante et conférer au dispositif la rigidité nécessaire pour servir de tuteur,
- les brins transversaux peuvent être réalisés avec une section inférieure pour rompre facilement lors de la croissance du plant et ne pas gêner son développement ultérieur,
- les filaments permettent en outre le cas échéant d'éviter le passage du feuillage à travers les mailles et d'empêcher les rongeurs, plus particulièrement les lapins, de ronger les brins longitudinaux ou transversaux,
- l'élément tubulaire peut procurer le cas échéant un certain effet de serre favorisant le développement du plant,
- les coûts de plantation sont réduits car le dispositif peut être transporté avec le plant déjà en place à l'intérieur depuis la pépinière par exemple jusqu'au lieu de plantation et se tenir verticalement sans l'aide de tuteurs,
- la motte de terreau présente à l'intérieur de l'élément tubulaire constitue une réserve de nutriments pour le plant.

Lorsque l'élément tubulaire comporte en partie supérieure un réseau de petites mailles, le plant est davantage abrité du soleil et des intempéries, ce qui peut s'avérer avantageux dans certains environnements climatiques.

L'invention sera mieux comprise à la lecture de la description qui va suivre, d'exemples de réalisation non limitatifs, et à l'examen du dessin annexé sur lequel :
- la figure 1 est une vue schématique en perspective d'un dispositif de protection conforme à un premier exemple de réalisation de l'invention,
- la figure 2 représente isolément, en vue de face, une maille du dispositif de la figure 1,
- la figure 3 est une vue schématique en perspective d'un dispositif de protection conforme à un deuxième exemple de réalisation de l'invention, et
- la figure 4 représente isolément, en vue de face, une maille du dispositif de la figure 3.

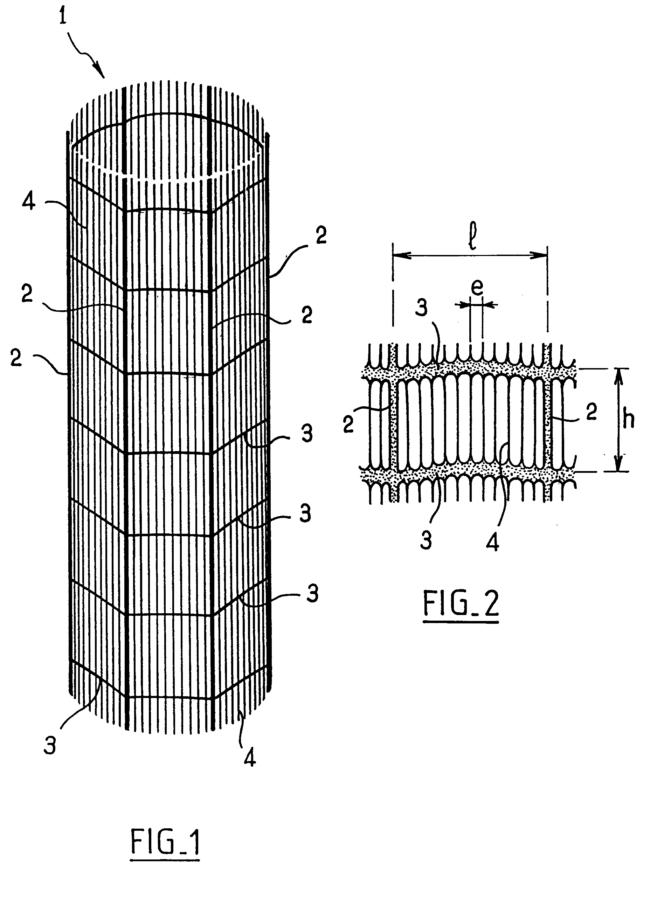

Le dispositif 1 représenté sur la figure 1 se présente sous la forme d'un élément tubulaire de section sensiblement constante en matière plastique réalisé par extrusion, en polyéthylène par exemple, comprenant un ensemble de brins longitudinaux 2 et un ensemble de brins transversaux 3 réunis en leurs entrecroisements pour former des mailles.

Les brins longitudinaux 2 s'étendent parallèlement à l'axe de l'élément tubulaire tandis que les brins transversaux 3 forment des boucles s'étendant sensiblement selon des plans perpendiculaires à cet axe.

La section des brins longitudinaux 2 est triangulaire ou trapézoïdale convergeant vers l'axe de l'élément tubulaire.

Les brins longitudinaux 2 forment saillie vers l'intérieur de l'élément tubulaire sur une distance comprise de préférence entre 1 et 2 mm environ.

La section des brins longitudinaux 2 est de préférence comprise entre 2 et 5 mm² et celle des brins transversaux est de préférence inférieure.

Chaque maille comporte, comme représenté sur la figure 2, une pluralité de filaments 4 s'étendant sensiblement parallèlement aux brins longitudinaux 2, entre les brins transversaux 3 auxquels ils se raccordent à leurs extrémités.

La section de ces filaments 4 est de préférence inférieure à celle des brins longitudinaux et transversaux et elle est de préférence inférieure à 1,5 mm².

Chaque maille forme sensiblement un rectangle, dont les petits côtés sont parallèles à l'axe de l'élément tubulaire, les brins transversaux 3 étant légèrement courbes de par le procédé d'extrusion.

Dans l'exemple décrit, la longueur 1 de chaque maille vaut 4 cm environ, sa hauteur h 2,5 cm environ et l'écartement e entre deux filaments 4 est de 4 mm environ, chaque maille en comportant dix.

La hauteur totale du dispositif 1 est de 0,65 ou 1,20 m par exemple et son diamètre de 9 ou 10 cm par exemple.

Le dispositif 1 peut être facilement aplati pour le transport en le pliant selon deux génératrices.

Les plants sont introduits avec une motte de terreau à l'intérieur du dispositif 1, qui sert alors de conteneur.

Le plant est ensuite transporté avec le dispositif 1 sur le lieu de plantation.

Après avoir creusé un trou dans le sol, on enterre la partie inférieure du dispositif 1 de manière à permettre aux racines du plant de continuer à se développer dans le sol.

Les brins longitudinaux 2 et les filaments 4 favorisent le développement du système de racines comme expliqué plus haut.

Il n'est pas nécessaire de maintenir le dispositif 1 verticalement au moyen de tuteurs, car les brins longitudinaux 2 lui confèrent suffisamment de rigidité.

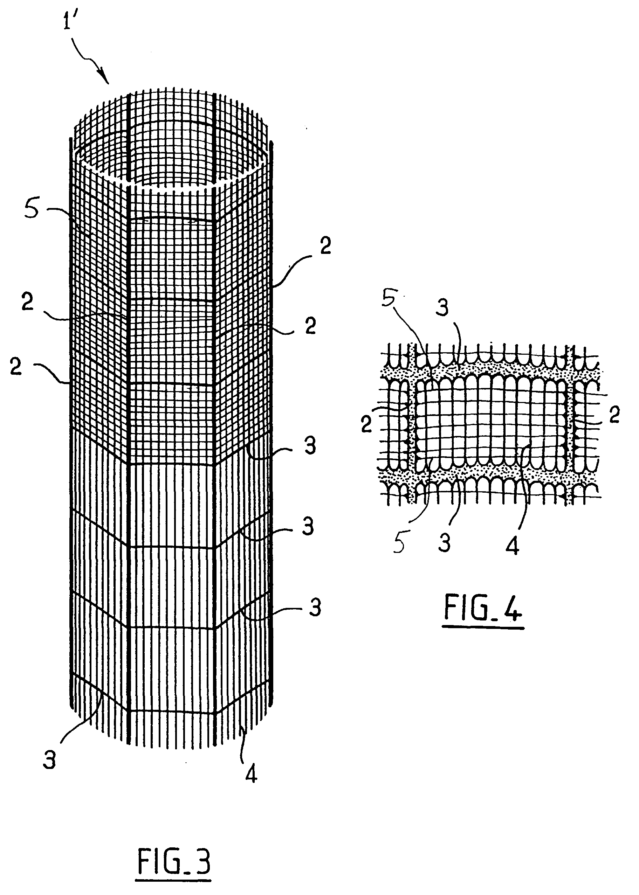

Le dispositif 1' de la figure 3 diffère de celui de la figure 1 par le fait qu'il comporte en partie supérieure un ensemble de filaments 5 s'étendant au sein de chaque maille parallèlement aux brins transversaux 3 et se raccordant à leurs extrémités aux brins longitudinaux 2.

Les filaments 4 et 5 sont réunis en leurs entrecroisements pour constituer un ensemble de petites mailles, chacune de section d'ouverture notablement inférieure à celle d'une maille constituée par les brins 2 et 3.

Le dispositif 1' s'utilise comme le dispositif 1, la partie supérieure comportant le réseau de petites mailles étant destinée à dépasser hors du sol pour abriter le plant.

## Revendications

1. Dispositif de protection de plants d'arbres, comportant un élément tubulaire en matière plastique, lequel comprend un ensemble de brins longitudinaux et un ensemble de brins transversaux réunis en leurs entrecroisements pour former des mailles, caractérisé par le fait que ledit élément tubulaire comporte au moins en partie inférieure au sein de chaque maille une pluralité de filaments (4) sensiblement parallèles aux brins longitudinaux (2) et s'étendant librement entre les brins transversaux (3), auxquels ils se raccordent à leurs extrémités.

2. Dispositif selon la revendication 1, caractérisé par le fait qu'il comporte en partie supérieure des filaments (5) sensiblement parallèles aux brins transversaux (3), les filaments (4) et (5) étant réunis en leurs entrecroisements pour former un réseau de petites mailles.

3. Dispositif selon la revendication 1, caractérisé par le fait que l'élément tubulaire comporte sur toute sa hauteur au sein de chaque maille une pluralité de filaments (4) sensiblement parallèles aux brins longitudinaux (2) et s'étendant librement entre les brins transversaux (3), auxquels ils se raccordent à leurs extrémités.

4. Dispositif selon l'une quelconque des revendications 1 à 3, caractérisé par le fait que la section des brins transversaux (3) est inférieure à celle des brins longitudinaux (2).

5. Dispositif selon l'une quelconque des revendications 1 à 4, caractérisé par le fait que la section des filaments (4) est inférieure à celle des brins transversaux et à celle des brins longitudinaux.

6. Dispositif selon l'une quelconque des revendications précédentes, caractérisé par le fait que la section des brins longitudinaux (2) est comprise entre 2 et 5 mm².

7. Dispositif selon l'une quelconque des revendications 1 à 6, caractérisé par le fait que les brins longitudinaux présentent en section transversale une forme triangulaire ou trapézoïdale convergeant vers l'axe de l'élément tubulaire.

8. Dispositif selon l'une quelconque des revendications précédentes, caractérisé par le fait que la section des filaments (4) est inférieure à 1,5 mm².

9. Dispositif selon l'une quelconque des revendications précédentes, caractérisé par le fait que chaque maille forme sensiblement un rectangle dont les petits côtés sont parallèles à l'axe de l'élément tubulaire.

10. Dispositif selon l'une quelconque des revendications précédentes, caractérisé par le fait qu'il est réalisé par extrusion.

11. Procédé pour mettre en place un dispositif de protection tel que défini dans l'une quelconque des revendications précédentes, caractérisé par le fait qu'il comporte les étapes consistant à :
- disposer le plant à l'intérieur de l'élément tubulaire,
- déplacer le plant avec sa motte et l'élément tubulaire jusqu'au lieu de plantation et
- mettre en terre le plant en enterrant partiellement l'élément tubulaire.
